# EUROPEAN PATENT SPECIFICATION

(11) **EP 3 209 556 B1**
(45) Date of publication and mention of the grant of the patent: **17.06.2020**
(21) Application number: 15778933.0
(22) Date of filing: 12.10.2015
(51) Int. Cl.: H02J 3/00, B63H 25/42, B63H 23/24, B63B 35/44

(54) **POWER SYSTEM OF A FLOATING VESSEL**
STROMVERSORGUNGSSYSTEM FÜR EIN WASSERFAHRZEUG
SYSTÈME D'ALIMENTATION ÉLECTRIQUE POUR NAVIRE FLOTTANT

(30) Priority: 20.10.2014 EP 14189540
(43) Date of publication of application: 30.08.2017
(73) Proprietor: Siemens Aktiengesellschaft, 80333 München (DE)
(72) Inventor: VAN RAVENS, Rune, N-1480 Slattum (NO)
(74) Representative: Maier, Daniel Oliver
(86) International application number: PCT/EP2015/073523
(87) International publication number: WO 2016/062565

(56) References cited:
- EP-A1- 2 595 265
- EP-A2- 2 090 508
- WO-A1-2009/052843
- WO-A1-2010/133540
- WO-A1-2012/175624
- US-A1- 2014 062 196

## Description

### Field of the invention

The present invention relates to a power system of a floating vessel, in particular of a dynamically positioned offshore vessel. The present invention further relates to a method of providing such power system for a floating vessel.

### Background

Some types of floating vessels, such as dynamically positioned ships, floating offshore platforms (e.g. semi-submersibles), drilling vessels, FPSOs (floating production storage and offloading vessels) and the like use electric propulsion systems in which propellers are driven by electrical motors. Examples include azimuth thrusters of a vessel, which comprise an electric motor connected to the propeller. Electricity is generally produced onboard of such vessels, for example by one or more generators coupled to a diesel or gas engine or gas turbine, and transmitted by an onboard power grid to the electric motor for driving the thruster. Such vessel can comprise further electrical drives that require electrical power for operation, including anchor winch drives, drives of drilling applications, drives of cranes and the like, and can furthermore comprise electric motors operating auxiliaries.

Floating vessels employing such types of electric drives generally comprise an onboard power plant, which produces the required electrical energy, for example by the above mentioned diesel engine or gas turbine coupled to a generator. Such arrangements provide the main power supply for the vessel. If the power plant experiences a blackout, or if there is a fault in the onboard power grid or in a component coupled thereto, the vessel might lose its main power supply.

Dynamically positioned vessels make use of their thrusters to keep the vessel at a fixed position when anchoring is not feasible or desirable. For example during a drilling operation, it is essential that the position is kept. Inoperability of the thrusters may lead to a loss of position and maneuverability. Accordingly, rules and regulations require a built-in redundancy in the power system of the vessel to ensure operability of the remaining thrusters even if parts of the power system experience a blackout. Certain requirements have to be met for a vessel to obtain a class approval, such as equipment class 2 (e.g. DYNPOS-AUTR; abbreviated DP2) or equipment class 3 (e.g IMO class 3, ABS DPS-3, DnV DYNPOS-AUTRO, or DnV DPS-3; abbreviated DP3) and the like (see IMO MSC/Circ.645, "Guidelines for vessels with dynamic positioning systems"). The power generation system may for example be split into several separate and independent subsystems. For DYNPOS-AUTRO classification or DPS-3 classification, the main power distribution bus is for example split into 2, 3 or more different sections, each being connected to a generator. Bus tie breakers provided between the sections of the main power distribution bus have traditionally been required to be open during class 3 operation so that one section is not affected by a blackout in another section.

The power sources and power distribution bus sections can for example be segregated into different section/compartments so that only a limited number of power sources and thus operation of thrusters are lost in the case that a section or compartment becomes flooded or suffers from fire. Physical separation in this way provides redundancy. The different sections of the power system need to be capable of operating independently and of providing power to operate enough thrusters to keep the vessel's position. As a result, such power systems have a significant over-capacity in terms of thrusters and power sources, and further a costly segregation into compartments, requiring a massive cable installation. Such design and the required over-capacity increase the costs of construction and operation, and they further add weight to and require space on the vessel.

The higher the number of separate sections, the smaller the portion of the overall capacity that is lost in case of a fault. Increasing the segregation thus reduces the required over-capacity and the associated weight and space. However, the number of segregated sections is generally limited by the overall cost of the vessel. Additional machinery rooms are costly due to the required auxiliary systems. An increased segregation of the power system throughout the vessel also includes additional cable routing and piping, which further adds to the cost and the complexity of the power system. This is in particular true for vessels for which the classification requires cables and auxiliary systems to be fully segregated. In particular, segregation by fireproof walls throughout the vessel is costly and generally sets restrictions to deck arrangement.

Traditionally, during DP3 operations, the power systems have to be operated with open bus ties (isolated power sections). This is to avoid loss of power and position even in case of a worst case fault scenario, such as fire or flooding of a complete compartment. More recent developments allow the vessel to operate with closed bus ties during DP3 operations, leading to significantly reduced fuel consumption, since fewer generators need to run in parallel, and the generators and prime movers can be operated in an effective range. This is achieved by providing sophisticated protection mechanisms.

The document EP 2 654 156 A1 describes for example a fault protection system for a power system of a dynamically positioned vessel, in which different protection zones, e.g. for the generator, the bus ties and a bus subsection, are provided to allow fast and efficient fault detection and isolation.

The document EP 2 654 157 A1 describes a fault protection system for a power system of a dynamically positioned vessel which employs a generator ride-through system and a thruster drive ride-through system to allow a fast restart of the power system and ensure continued operation of the thrusters connected thereto during and after a blackout.

WO2009052843 describes electrical switchgear for feeding at least two electrical consumers with energy from at least two energy sources.

EP2595265 describes a power supply system of a marine vessel comprising electric motors and generators and a control system to control the voltage setpoint of the generator.

WO2010133540 describes a ship with longitudinal and transverse propulsion. Switching between a main engine and a secondary engine varies the speed of rotation of a secondary propeller.

WO2012175624 describes a vessel propulsion system having two generator sets, electric propulsion and energy storage to store excess energy for instantaneous needs of the vessel.

US2014062196 describes a power transmission system and a power substation receiving DC from a power source.

Such power systems are for example segregated into three sections and compartments, each comprising two generators and a switchboard from which two thrusters are powered. Accordingly, if such compartment is lost, two thrusters become inoperable. Furthermore, such power system configurations require significant cabling on the floating vessel to supply each of the thrusters with electrical power. As mentioned above, the cabling significantly adds to the weight and space requirements of the power system on the floating vessel, and furthermore is a relatively large cost factor.

It is thus desirable to reduce the weight and space requirements of a power system on a floating vessel, and in particular to reduce such cabling. Furthermore, it is desirable to avoid the loss of several thrusters upon the loss of a compartment of the vessel, for example an engine room and/or a switchboard room.

### Summary

Accordingly, there is a need for an improved power system for a floating vessel, and in particular for a power system in which the loss of operability of thrusters can be reduced upon occurrence of a fault, in particular upon the loss of a main switchboard due to fire or flooding.

This need is met by the features of the independent claims. The dependent claims describe embodiments of the invention.

According to an embodiment of the invention, a power system of a floating vessel, in particular of a dynamically positioned offshore vessel is provided. The power system has at least two segregated power system sections, each comprising at least one electrical power source, in particular a generator, and a directly powered main switchboard which is (directly) supplied with electrical power from the electrical power source. The directly powered main switchboard is configured to distribute electrical power to one or more thruster drives of the floating vessel for operating the respective thruster drives. The power system further includes at least two indirectly powered main switchboards to each of which a thruster drive of the floating vessel is connected (or connectable). Indirectly powered means that each indirectly powered main switchboard is configured, i.e. connected (or connectable) to receive electrical power indirectly from at least one of the electrical power sources via at least one (other) directly or indirectly powered main switchboard. Each indirectly powered main switchboard is configured to supply electrical power to the respective connected thruster drive for operating the thruster drive. The at least two directly powered main switchboards and the at least two indirectly powered main switchboards are connected (or connectable) in a ring configuration such that two or more indirectly powered main switchboards are connected in series between a first directly powered main switchboard and a second directly powered main switchboard. Each segregated power system section comprises an engine room in which the electrical power source is located and a switchboard room in which the directly powered main switchboard is located. The engine rooms and the switchboard rooms are located in the same section of the floating vessel. The indirectly powered main switchboards are located in further switchboard rooms, in particular in thruster rooms, located in a different section of the floating vessel. In particular, each indirectly powered main switchboard may be located in its own thruster room of the respective connected thruster drive. The power system may comprise at least three directly powered main switchboards may be provided, the first loop being connected between the first and the second directly powered main switchboards and the second loop being connected between the second and a third directly powered main switchboard. In another example, at least four directly powered main switchboards may be provided, the first loop being connected between the first and the second directly powered main switchboards, and the second loop being connected between a third and a fourth directly powered main switchboard.

Such power system has several advantages. Due to the ring configuration and the series-connected indirectly powered main switchboards, the number of thrusters that become inoperable upon the loss of a power system section can be reduced. As an example, if to each directly powered main switchboard, a single thruster drive is connected, only power to this thruster drive will be lost upon loss of this directly powered main switchboard. Since the further thruster drives are connected to the indirectly powered main switchboards in a ring configuration, they can continue to receive power from another directly powered main switchboard of the power system. Even with a relatively low number of the segregated power system sections (an corresponding directly powered main switchboards), the loss of power to thruster drives can thus be reduced in case of a severe incident such as the loss of a complete power system section. Furthermore, due to the series connection of the indirectly powered main switchboards, these switchboards can be located in a different section of the floating vessel and require only a cable connection by means of two cable sets. The space and weight requirements, as well as the required cabling of the power system can thus be reduced. The cost of the power system may thus also be reduced.

The term "main" in the term "main switchboard" means that the main power for operating the thruster drive, in particular electrical motor turning the propeller, is supplied via such main switchboard. Auxiliary equipment of the thruster may also receive electrical power via the respective main switchboard. Furthermore, the term "directly connected" or "directly supplied" indicates that no further main switchboard is connected between the respective main switchboard and the thruster drive or power source. Yet "directly connected" or "directly supplied" also encompasses connections with intervening elements or components, such as a transformer, a converter, a circuit breaker, protection equipment such as a fuse and the like.

"Indirectly powered main switchboard" in particular means that no electrical power source, such as a generator, or other active source of electrical power, is directly connected to the indirectly powered main switchboard, but only indirectly via at least one intervening/intermediary directly powered main switchboard. The indirectly powered main switchboard may include energy storage systems which can return electrical power to the switchboard at a later time, with the original power generation occurring elsewhere.

Connected in series between the first directly powered main switchboard and the second directly powered switchboard means that there is no further intervening directly powered main switchboard between the series-connected indirectly powered main switchboards. The at least two series-connected indirectly powered main switchboards may be considered to form a loop in the ring configuration. It should be clear that the ring configuration may have further such loops, and that the ring configuration may be configured as a single ring, or as two, three or even more rings, depending on the respective application and the number of main switchboards. That the directly powered main switchboard is configured to distribute electrical power to one or more thruster drives of the floating vessel does not mean that such thruster drive has to be directly connected to the directly powered main switchboard (but it could be). The power distribution can rather occur by the directly powered main switchboard supplying electrical power to one or more indirectly powered main switchboards, to which a thruster drive is directly connected. Accordingly, some embodiments may have thruster drives directly connected to the directly powered main switchboards, while other embodiments may not.

In an embodiment, the power system comprises at least three indirectly powered main switchboards which are connected in series between the first directly powered main switchboard and the second directly powered main switchboard. In this configuration, at least one indirectly powered main switchboard is connected between two indirectly powered main switchboards in the ring configuration. In such configuration, three or more thruster drives may be provided with electrical power via the three or more series-connected indirectly powered main switchboards. These can be located in a different section of the vessel than the section in which the electrical power sources are located. Only two cable sets may need to be provided between these different sections of the floating vessel for supplying the three or more thruster drives with electrical power, while a redundancy in the power supply is maintained, so that the power supply to these thruster drives is ensured even if a segregated power system section is lost.

In an embodiment, the power system comprises at least three segregated power system sections, each comprising a directly powered main switchboard and at least one electrical power source, in particular a generator, (directly) connected (or connectable) thereto. In such configuration, a three-split segregation of the power system becomes possible. The power system may thus be split into three fully independent power system sections, for example during the DP3 operations, or if advanced protection systems are employed which allow DP3 operation with closed bus ties, upon the occurrence of a severe fault.

In an embodiment, each segregated power system section comprises at least two electrical power sources, in particular generators, connected to the directly powered main switchboard. Accordingly, it may be ensured in such configuration that enough electrical power is available for powering the thruster drives of the floating vessel in case of loss of one segregated power system section. To each directly powered main switchboard, at least one thruster drive may be connected (or connectable). As an example, the thruster drives in one section of the floating vessel may be directly powered (i.e. supplied with electrical power) from the directly powered main switchboards, while the thruster drives in another section of the floating vessel may be directly powered from the indirectly powered main switchboards.

In an embodiment, the power system may comprise at least four indirectly powered main switchboards. At least two of the indirectly powered main switchboards are series-connected between two directly powered main switchboards to form a first loop, and at least two of the indirectly powered main switchboards are series-connected between two directly powered main switchboards to form a second loop. These two loops may be connected between the same directly powered main switchboards, for example between the first and the second directly powered main switchboards, or may be connected between different further directly powered main switchboards.

By providing two or even more loops of series-connected indirectly powered main switchboards, thrusters located in different sections of the floating vessel may be supplied efficiently and with a high degree of redundancy with electrical power, while the segregation and cabling required for such redundant power supply can be reduced significantly.

Each loop of series-connected indirectly powered main switchboards may for example comprise two, three, four or even more indirectly powered main switchboards. Due to the connection of the loop between two directly powered main switchboards, it can be ensured that the thruster drives connected to the indirectly powered main switchboards can still continue to receive electrical power even if one of the directly powered main switchboards is lost.

In an embodiment, the power system comprises a power distribution bus having several bus sections, each main switchboard comprising a bus section of power distribution bus. The main switchboards, i.e. the directly and indirectly powered main switchboards, are connected in the ring configuration by connecting the respective bus sections in this ring configuration using bus ties and/or cables. It should be clear that such connections can comprise circuit breakers or other intervening components, in particular bus tie breakers and bus circuit breakers. In the ring configuration, each bus section may thus be connected to two neighboring bus sections.

The electrical power source and the directly powered main switchboard of each segregated power system section may be provided in a different room or compartment than the electrical power source and the directly powered main switchboard of the other segregated power system sections. In particular, they might be provided in an engine room and a switchboard room. Accordingly, if such compartment, e.g. the engine room and the switchboard room, is flooded or lost due to fire, the remaining segregated power system sections can continue operation. The rooms or compartments may for example at least be separated by a fireproof wall, in particular by an A60 firewall. Each segregated power system section is configured to be operable independent of the others, i.e. it may continue operation even if the one or more of the other power system sections are damaged and inoperable.

Each of the at least two directly powered main switchboards and the at least two indirectly powered main switchboards are provided in a different room or compartment onboard the floating vessel. The directly power main switchboards may for example be provided in respective main switchboard rooms, while the indirectly powered main switchboards may for example be provided in thruster rooms or pump rooms of the thruster which the respective main switchboard powers. No additional switchgear rooms may thus be required for the indirectly powered main switchboards, resulting in reduced space requirements and thus a cost reduction.

In an embodiment, the directly powered main switchboards are provided in a first section of the floating vessel. The series connection of the indirectly powered main switchboards may form at least a first loop between the first and second directly powered main switchboards. The indirectly powered main switchboards of the first loop may be located in a second section of the floating vessel, for example in a front section (forward) or a rear section (aft) or in a pontoon. The power system may further comprise a first cable set connecting a first end of the first loop to the first directly powered main switchboard and a second cable set connecting a second end of the first loop to the second directly powered main switchboard. Accordingly, these two cable sets may be sufficient to supply several thruster drives connected to the indirectly powered main switchboards in the first loop with electrical power in a redundant way.

In an embodiment, the floating vessel may be a semi-submersible having a deck and at least two pontoons, the power system having a second loop of series-connected indirectly powered main switchboards. The directly powered main switchboards of the power system are arranged on the deck of the floating vessel, and the indirectly powered main switchboards of the first loop are arranged in one of the pontoons. The indirectly powered main switchboards of the second loop are arranged in the other of the pontoons. Only two cable sets may then be provided from the deck into each of the pontoons for supplying both ends of the respective first or second loop with electrical power in a redundant way. Accordingly, two, three, four or even more thruster drives in each of the two pontoons can be powered redundantly by a total of four cable sets. Conventional systems powering three or four thruster drives in each pontoon generally require at least six or eight cable sets. Again, significant savings in costs, weight and space may thus be achieved.

In an embodiment, each of the directly or indirectly powered main switchboards may be (directly) connected to (exactly) one thruster drive to provide the thruster drive with electrical power for operation. In such configuration, the loss of one main switchboard will always result in the loss of only one thruster drive, leading to a high degree of availability of the thruster drives of such power system.

All thruster drives of the floating vessel may be independently operable, i.e. they may be fully autonomous thrusters. This means that if the main switchboard to which the thruster drive is connected receives electrical power, the thruster drive is operable, independent of the status of the remaining thruster drives or main switchboards.

In one embodiment of the power system the indirectly powered main switchboards may further comprise one or more local energy storage systems. The energy storage systems may comprise one of batteries, capacitors, or flywheels. The energy storage system may be collocated with the indirectly powered main switchboard.

Local energy storage systems, including those which are able to return electrical power to the switchboard at a later time, having stored power originally generated elsewhere, for example when excess generator power is available, are more environmentally friendly than having additional generators on standby. Fuel, maintenance costs and emissions from the vessel can be reduced. Stored energy systems are typically smaller and lighter, which is a particular benefit on an offshore vessel, as well as tending to have less of a fire risk than generators in an engine room. The stored energy systems may be located below the water line in the vessel, as providing external fluid ducts e.g. for air inlet and exhaust outlets, is less of an issue than for generator operation. Overall space requirement compared to generators may be reduced, as there are fewer auxiliaries required.

The power system may be configured to allow operation with all bus ties in said ring configuration closed in any dynamic position mode. For this purpose, the power system may make use of the protection mechanisms disclosed in any of the documents EP 2 654 156 A1 and EP 2 654 157 A1, the contents of which is incorporated herein by reference in its entirety.

According to a further embodiment of the invention, a floating vessel, in particular a dynamically positioned offshore vessel, comprising a power system in any of the above outlined configurations is provided.

The floating vessel may be a dynamically positioned ship or offshore platform, such as a cable layer ship or a drilling semi-submersible.

A further embodiment of the invention relates to a method of providing a power system for a floating vessel, in particular for a dynamically positioned ship or offshore platform. The method comprises the steps of providing at least two segregated power system sections, each comprising at least one electrical power source, in particular a generator, and a directly powered main switchboard which is (directly) supplied with electrical power from the electrical power source. The directly powered main switchboard is configured to distribute electrical power to one or more thruster drives of the floating vessel for operating the respective thruster drives. In a further step, at least two indirectly powered main switchboards are provided, to each of which a thruster drive of the floating vessel is (directly) connected. Each indirectly powered main switchboard is configured to supply electrical power to the respective connected thruster drive for operating the thruster drive. The method further includes connecting each indirectly powered main switchboard so as to receive electrical power indirectly from at least one of the electrical power sources via at least one of the directly or indirectly powered main switchboards; and connecting the at least two directly powered main switchboards and the at least two indirectly powered main switchboards in a ring configuration such that two or more indirectly powered main switchboards are connected in series between a first directly powered main switchboard and a second directly powered main switchboard.

Each segregated power system section comprises an engine room in which the electrical power source is located and a switchboard room in which the directly powered main switchboard is located. The indirectly powered main switchboards are arranged in further rooms, in particular thruster rooms or switchboard rooms. The steps further comprise locating the engine rooms and the switchboard rooms in the same section of the floating vessel, and locating the thruster rooms or switchboard rooms in a different section of the floating vessel. The power system may comprise at least three directly powered main switchboards, the first loop (91) being connected between said first and second directly powered main switchboards (11, 12) and the second loop (92) being connected between said second and a third directly powered main switchboard (12, 13), or the power system may comprise at least four directly powered main switchboards, the first loop (91) being connected between said first and second directly powered main switchboards (11, 12) and the second loop (92) being connected between a third and a fourth directly powered main switchboard (13, 14).

By means of such method, a power system may be obtained which has advantages similar to the ones outlines further above.

The method may be performed so as to provide a power system for a floating vessel in any of the above outlined configurations. In particular, method steps and structural features described further above with respect to the power system may form part of the method.

The features of the embodiments mentioned above and those yet to be explained below can be combined with each other unless noted to the contrary.

### Brief description of the drawings

The foregoing and other features and advantages of the invention will become further apparent from the following detailed description read in conjunction with the accompanying drawings. In the drawings, like reference numerals refer to like elements.
Figure 1 is a schematic drawing showing a power system according to an embodiment of the invention.
Figure 2 is a schematic drawing showing a power system according to a further embodiment of the invention, and further illustrating an exemplary arrangement of components of the power system onboard a floating vessel.
Figure 3 is a schematic drawing showing the power system of figure 2 with a different arrangement of components of the power system onboard the floating vessel.
Figures 4A and 4B are schematic drawings showing a power system according to a further embodiment of the invention and showing the arrangement of components of such power system onboard a floating vessel.
Figures 5A and 5B are schematic drawings showing a power system according to a further embodiment of the invention and further showing the arrangement of components of such power system onboard a floating vessel.

### Detailed description

In the following, embodiments of the invention will be described in detail with reference to the accompanying drawings. It is to be understood that the following description of the embodiments is given only for the purpose of illustration and is not to be taken in a limiting sense. The drawings are to be regarded as being schematic representations only, and elements in the drawings are not necessarily to scale with each other. Rather, the representation of the various elements is chosen such that their function and general purpose become apparent to a person skilled in the art. It is also to be understood that the coupling of physical or functional units as shown in the drawings and described hereinafter may also be a connection or coupling with one or more additional intervening elements, such as transformers, circuit breakers, converters, fuses and the like. Further, it is noted that the term "connected" also implies "connectable", for example via a switch or circuit breaker or the like, or by establishing a cable connection or busbar connection or the like.

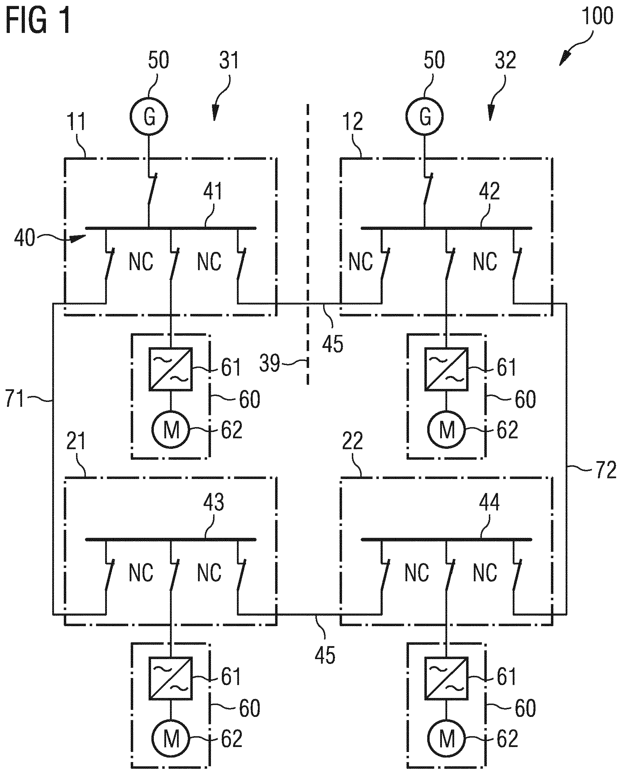

Figure 1 schematically illustrates the power system 100 including the two segregated power system sections 31, 32, which may for example be provided in different compartments or rooms on board of the floating vessel and which are at least separated by the fireproof wall 39. In each of the power system sections 31, 32, a directly powered main switchboard 11, 12 and an electrical power source in forma of a generator 50, are provided. The generator 50 may be driven by a prime mover such a diesel engine or a gas turbine. The generator supplies electrical power directly, i.e. without any further intervening main switchboard, to the respective directly powered main switchboard 11, 12. Directly powered in this sense means that in normal operation, the directly powered main switchboard 11, 12 receives the electrical power directly from the respective connected generator 50.

The electrical power sources 50 may also be termed dedicated electrical power source since each is dedicated to a particular directly powered main switchboard 11, 12.

To each of the directly powered main switchboards 11, 12, a thruster drive 60 is directly connected. The thruster drive 60 may for example comprise a frequency converter 61 and an electric motor 62. By means of the frequency converter 61, the AC frequency of the electrical power supplied to the motor 62 may be adjusted in order to control the rotational speed of motor 62. A propeller (not shown) is mechanically connected to the motor 62 to provide propulsion of the vessel. The thruster drive 60 is directly connected to the respective directly powered main switchboard 11, 12 meaning that there is no intervening main switchboard between the thruster 60 and the respective directly powered main switchboard 11, 12. This does not preclude the presence of other elements or components in the connection between the respective main switchboard 11, 12 and the thruster drive 60, such as a transformer, switches or circuit breakers, protective components such as fuses and the like.

The power system 100 further includes at least two indirectly powered main switchboards 21, 22. As shown in figure 1, the switchboards 21, 22 are also considered to be main switchboards since they provide electrical power for operation of the respective connected thruster drive 60. Furthermore, these indirectly powered main switchboards 21, 22 are not directly connected to an electrical power source in form of the generators 50, but they receive electrical power via at least one further main switchboard, in particular via one of the directly powered main switchboards 11, 12 in the example of figure 1. However, although there is no generator, prime mover, or other active source of electrical power, an energy storage system may be provided for the indirectly powered main switchboard which can return electrical power to the switchboard at a later time, the power having originally been generated elsewhere. For example, in environmentally sensitive areas, such stored electrical energy would reduce emissions, or be able to act as a short term source of electrical power during essential maintenance to the generators connected to the directly power main switchboard.

As illustrated in figure 1, the directly powered main switchboards 11, 12 and the indirectly powered main switchboards 21, 22 are connected in a ring configuration. As can be seen, the connection is such that the indirectly powered main switchboards 21, 22 are connected in series between the first directly powered main switchboard 11 and the second directly powered main switchboard 12.

To provide such connection, the directly and indirectly powered main switchboards (or short main switchboards) 11, 12, 21, 22 each comprise a respective bus section 41, 42, 43, 44 of a power distribution bus 40 of the power system 100. The bus sections 41, 42, 43, 44 of this power distribution bus 40 are connected in a ring by means of the bus ties 54 and the cable sets 71, 72. As illustrated in figure 1, the main switchboards 11, 12, 21, 22 may comprise switches, in particular circuit breakers such as bus tie breakers, which can be used to disconnect the electrical connections to a neighboring main switchboard in the ring configuration. Accordingly, by opening the respective switches or circuit breakers, a bus section of the power distribution bus 40 can be isolated, for example upon occurrence of a fault in the respective power system section. Due to the ring configuration, the remaining main switchboards stay connected. In embodiments of the power system 100, each main switchboard is connected to at least two further main switchboards. In some embodiment, in particular when more than two directly powered main switchboards are comprised in the power system 100, a second or even a third ring of main switchboards may be formed in the power system 100.

In the embodiment illustrated in figure 1, only a single electrical power source in form of a generator 50 is connected to each directly powered main switchboard 11, 12. In other configurations, further electrical power sources can be connected directly to the respective directly powered main switchboards 11, 12. In the embodiment of figure 1, one single thruster drive 60 is directly connected to each main switchboard 11, 12, 21, 22. Furthermore, the indirectly powered main switchboards 21, 22 are also arranged in separate compartments or rooms on board of the floating vessel. Accordingly, if one compartment in which one main switchboard 11, 12, 21, 22 is located becomes flooded or damaged due to fire, only power to a single thruster drive 60 is lost. Since the remaining main switchboards stay connected, the remaining thruster drives can still be supplied with electrical power by the power system 100. This is an advantage over conventional systems in which loss of a single compartment generally results in loss of power to two or more thruster drives.

Furthermore, in the configuration illustrated in figure 1, the indirectly powered main switchboards 21, 22 do not require the direct connection of an electrical power source thereto. Still, the power system 100 is essentially segregated into four separate distinct sections. Accordingly, even though a high degree of segregation is provided, the over-capacity required for the segregation of the power system can be kept relatively low. The indirectly powered main switchboards 21, 22 are supplied in a redundant way with electric power from the two segregated power system sections 31, 32, so that if one of these is lost, both indirectly powered main switchboards 21, 22 can still be supplied with electrical power from the other power system section. This is achieved by the series connection of the main switchboards 21, 22 between the first directly powered main switchboard 11 and the second directly powered main switchboard 12. This series connection of indirectly powered main switchboards between the first and second directly powered main switchboards 11, 12 may be termed a "loop", and further indirectly powered main switchboards may be added to such loop, in order to power further thruster drives while providing a high degree of segregation and keeping overcapacity of the power system low.

Furthermore, it should be clear that the power system 100 may comprise further of such loops, which can be connected between the first and second directly powered main switchboards 11, 12, or may be connected to further directly powered main switchboards.

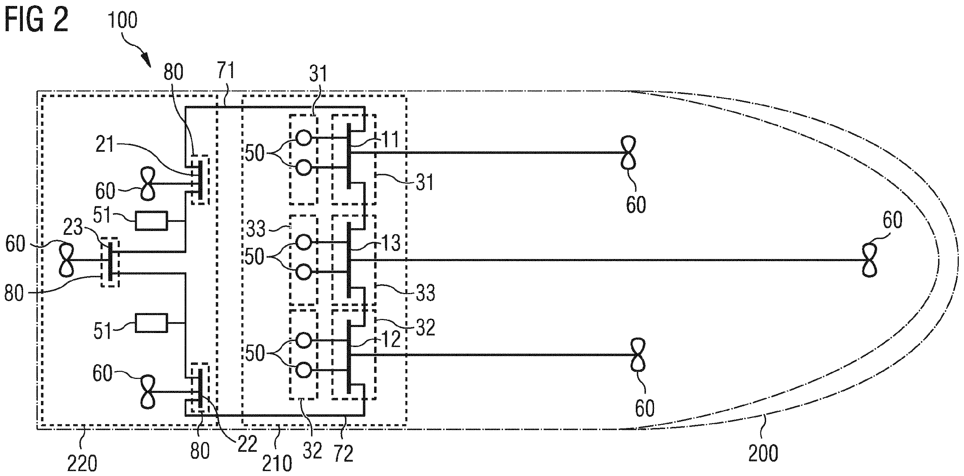

Figure 2 shows a particular implementation of the power system 100 of figure 1. Accordingly, the explanations given above are equally applicable to the power system illustrated in figure 2. The power system 100 is implemented on a vessel 200. In the example of figure 2, the power system 100 includes three directly powered main switchboards 11, 12, 13, as well as one loop including three indirectly powered main switchboards 21, 22 and 23. As can be seen, the indirectly powered main switchboard 23 receives its electrical power indirectly from one of the electrical power sources 50 via at least one directly powered main switchboard and one indirectly powered main switchboard. A first end of the loop is connected via a first cable set 71 to the first directly powered main switchboard 11 and a second end of the loop is connected via the cable set 72 to the second directly powered main switchboard 12. Again, each main switchboard 11, 12, 13; 21, 22, 23 powers a dedicated thruster drive 60 which is directly connected to the respective main switchboard. The thruster drives 60 are in figure 2 and in the subsequent figures schematically illustrated by means of a propeller symbol.

The power system 100 now has three segregated power system sections 31, 32, 33 each comprising two electrical power sources 50 in form of two generators, which again are driven by respective prime movers. As an example, the segregation may be achieved by providing the electrical power sources 50 of the different power system sections in different engine rooms, and by providing the directly powered main switchboards 11, 12, 13 of the different power system sections in different switchboard rooms. Accordingly, if the engine room and/or switchboard room of one power system section (e.g. 31) is lost due to flood or fire, the remaining power system sections (e.g. 32, 33) remain operable. The rooms of different power system sections may be separated at least by fireproof walls, for example by A60 firewalls.

The directly powered main switchboards and the electrical power sources 50 are provided in a first section 210 of the floating vessel 200. The indirectly powered main switchboards 21, 22, 23 are provided in a second section 220 of the floating vessel 200, in particular at the aft of the vessel in the example of figure 2. As can be seen from figure 2, with such configuration of the power system, only two cable sets 71, 72 are required to redundantly power the series connection of indirectly powered main switchboards 21, 22, 23, which supply three respective thruster drives 60 with electrical power. In a conventional system, significantly more cabling and overcapacity of the power system might be required in order to power a similar number of thrusters with a comparable degree of segregation and redundancy.

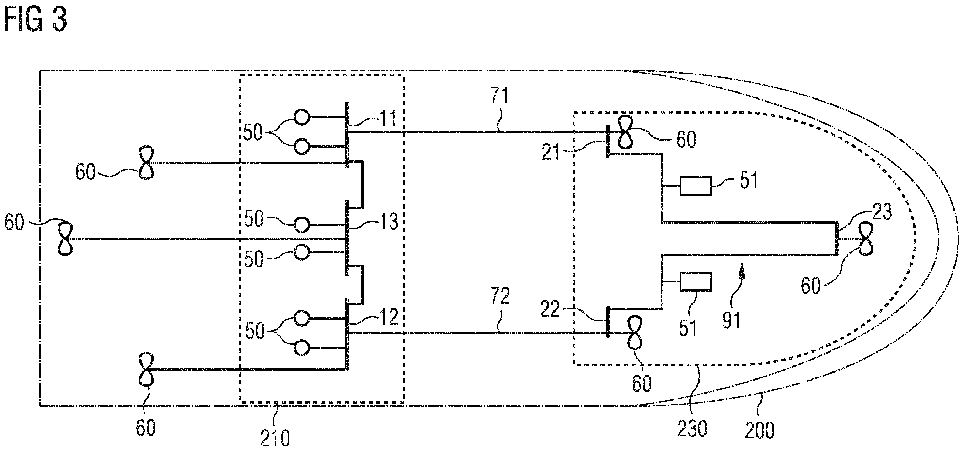

The indirectly powered main switchboards 21, 22, 23 are arranged in respective compartments, which in the example of figure 2 are the thruster rooms 80. These may for example further comprise the frequency converters 61 of the respective thruster drive 60. Again, if one of the thruster rooms 80 is lost e.g. due to fire or flooding, the remaining sections of the power system 100 remain operable, and only the operation of a single thruster is lost. Optionally, a local energy storage system 51 may be provided in the second section (220), for example a battery, capacitor or flywheel. The local energy storage system may receive energy via the directly powered main switchboard, for example when the generators have excess capacity and store it for use at a later time. The local energy storage system may be collocated with the indirectly powered main switchboard, as indicated in Figs.2 and 3.

Note that in figure 1, a compartment or a power system section 31, 32, 33 includes both, the respective engine room and the respective switchboard room.

The embodiment illustrated in figure 3 is a modification of the embodiment of figure 2, so the above explanations are equally applicable. For the purpose of a clear presentation, the engine rooms, switchboard rooms and thruster rooms are not explicitly illustrated in figure 3. As can be seen, the basic configuration of the power system 100 is comparable to the one of figure 2. The spatial arrangement of the components of the power system 100 is different. Again, the electrical power sources 50 and the directly powered main switchboards 11, 12, 13 are arranged in a first section 210 of vessel 230, in particular a middle section or midship. The directly powered main switchboards 11, 12, 13 supply electrical power to dedicated thruster drives of thrusters located in a rear section of the vessel 200 (aft thrusters). The indirectly powered main switchboards 21, 22, 23 are located in a front section 230 of vessel 200, in particular the forward section of the vessel. Again, as can be seen from figure 3, it is sufficient to supply the loop of indirectly powered main switchboards 21, 23, 22 by the first and second cable sets 71, 72, so that only two cable sets have to be laid across the main deck of the vessel.

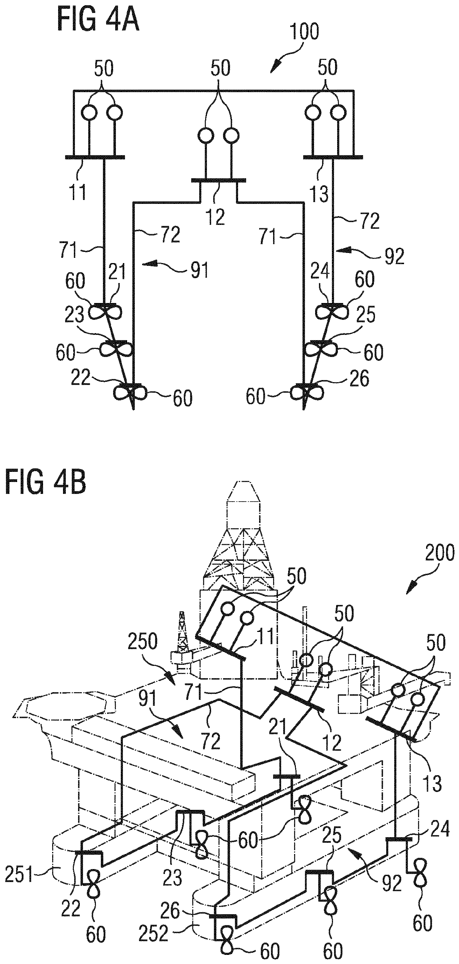

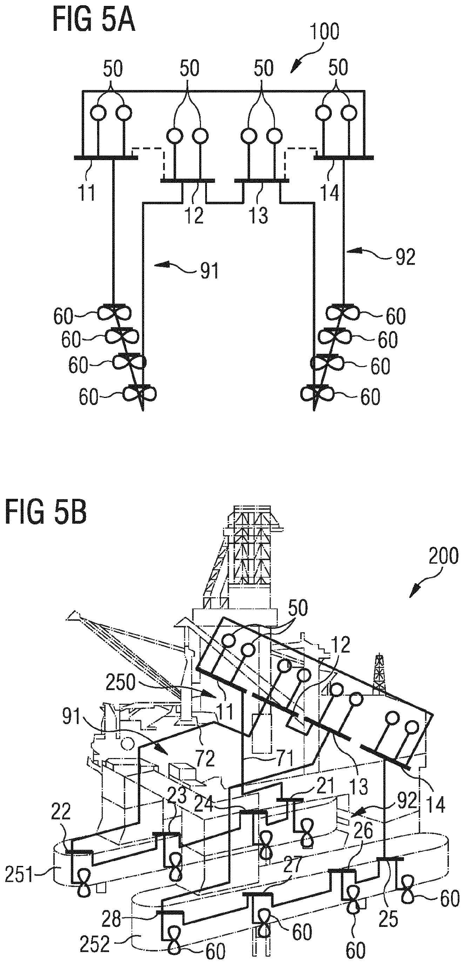

While figures 2 and 3 illustrate embodiments in which the floating vessel is provided in form of a ship and the power system 100 includes a single loop of indirectly powered main switchboards, figures 4 and 5 show a floating vessel in form of a semi-submersible offshore platform including a power system 100 having two loops 91, 92 of indirectly powered main switchboards. Nevertheless, the basic configuration of the power system 100 is similar to the above embodiments, so that the above explanations are equally applicable to figures 4 and 5.

Figure 4A shows a single line diagram of the power system 100 which includes three directly powered main switchboards 11, 12 and 13, each being directly connected to two electrical power sources 15, in particular to two generators. The first loop 91 again includes the indirectly powered main switchboards 21, 22, 23. The first loop 91 is at one end connected to a first directly powered main switchboard 11 and at the second end connected to the second directly powered main switchboard 12.

The second loop 92 includes a series connection of further three indirectly powered main switchboards 24, 25 and 26. At one end, the second loop 92 is connected to the second directly powered main switchboard 12, and at its second end, the second loop 92 is connected to the third directly powered main switchboard 13.

In such configuration, the loss of one of the directly powered main switchboards 11, 12 or 13, or the loss of the respective power sources 50, would not lead to the loss of power to a thruster of the vessel, since the thruster drives 60 can be powered from the remaining power system sections, in particular the remaining directly powered main switchboards. The loss of one of the indirectly powered main switchboards 21 to 26 would again lead to the loss of power to only a single thruster drive 60, the remaining thruster drives 60 would remain operational.

Furthermore, it is noted that in the example of figure 4A, there are no thruster drives directly connected to the directly powered main switchboards 11, 12, 13. Nevertheless, the directly powered main switchboards 11, 12, 13 are operational to distribute electrical power to the thruster drives 60 via the indirectly powered main switchboards 21 to 26 for operating the respective thruster drives connected thereto. It should be clear that in other configurations, at least one thruster drive may be connected to each directly powered main switchboard 11, 12, 13. The embodiment of figure 4A further illustrates the connection of the main switchboards in a single ring configuration. By providing a further direct connection between the main switchboards 11 and 12 / 12 and 13, e.g. via bus ties, a ring configuration having three rings can be obtained.

Figure 4B illustrates a floating vessel 200 in form of a semi-submersible offshore platform, having a deck 250 and first and second pontoons 251, 252. In the embodiment of figure 4B, the electrical power sources 50, in particular generators and corresponding prime movers, and the directly powered main switchboards 11, 12, 13 are arranged on the deck 250 of vessel 200, for example in respective engine rooms and switchboard rooms. The indirectly powered main switchboards 21 to 26 of the first and second loops 91, 92 are arranged together with the thruster drives 60 in the respective pontoons 251 and 252. For each loop, only a first cable set 71 and a second cable set 72 is required to power the respective thruster drives 60, so that only a total of four cable sets have to be led from the deck 250 into the pontoons 251, 252 of the floating vessel 200. In conventional power systems, at least six such cable sets are required to power the six thruster drives.

The embodiment of figures 5A and 5B corresponds to the embodiment of figures 4A and 4B. The difference between figures 4 and 5 is that in the embodiment of figure 5, four directly powered main switchboards 11, 12, 13 and 14 are provided. Furthermore, each loop 91, 92 comprises four indirectly powered main switchboards 21 to 24 and 25 to 28, respectively. The first loop 91 is now connected between the first and the second directly powered main switchboards 11, 12. The second loop 92 is now connected between the third and the fourth directly powered main switchboards 13, 14. In the configuration of figure 5, only two cable sets 71, 72 are required for powering the four thruster drives within one of the loops 91, 92, as can be seen in figure 5B. Accordingly, the power system 100 may require only four cable sets for powering the eight thruster drives 60 provided in the first and the second pontoons 251, 252. A conventional power system may require at least eight such cable sets. Furthermore, in case of loss of one of the indirectly powered main switchboards 21 to 28, only power to a single thruster drive 60 is lost.

Again, as indicated by the dotted lines, it is possible to provide further direct electrical connections between the directly powered main switchboards 11 and 12 / 13 and 14. Such configuration would result in a ring configuration with three rings, one formed by the directly powered main switchboards, and two being formed by the first and second loops 91, 92.

Other configurations of the power system 100 are certainly conceivable. As an example, the power system 100 may comprise a single loop having two, three, four or more indirectly powered main switchboards connected in series, or the power system 100 may comprise two, three, four or even more of such loops, depending on the requirements of the respective floating vessel. As illustrated in the drawings and explained further above, the power system 100 may also comprise different numbers of directly powered main switchboards, for example two, three, four or even more directly powered main switchboards. The power system 100 can allow a corresponding segregation of the power system, for example a two-split or three-split segregation for the configuration with two or three directly powered main switchboards, respectively. The directly powered main switchboards are for this purpose arranged in respective own compartments or switchboard rooms.

Note that the figures explained further above illustrate only single-line diagrams of the power system 100 including selected components for the purpose of illustration, while other components that may be present in the power system 100 are not shown. Such further components may for example include transformers, circuit breakers, converters, and auxiliary equipment for operating the generators, switchboards and thrusters, such as control and protection equipment as well as cooling and lubrication equipment and the like. Such components and equipment may certainly be present in the power system 100, and it may be implemented in a conventional manner.

As an example, the propeller symbol shown in figures 2-5 represents a thruster drive which can include a converter, in particular a thruster variable frequency drive and a thruster motor. Each thruster drive may be connected to the respective main switchboard via a thruster transformer. Furthermore, a thruster auxiliary switchboard for distribution electrical power to thruster auxiliaries can be provided for each thruster, and it can receive electrical power from the respective directly or indirectly powered main switchboard. Such thruster auxiliary switchboard may for example receive electrical power from an additional winding of the thruster transformer, or from a separate transformer feeder.

The power system 100 may provide AC (alternating current) electrical power distribution, and the power distribution bus 40 may accordingly be an AC power distribution bus. In particular, three-phase AC electrical power may be distributed by power system 100, and accordingly, the single lines in the drawings may be representative of a three-phase power connection, for example a three-phase power cable set, a three-phase bus tie or three-phase power distribution bus. In other embodiments, power system 100 may implement a DC (direct current) electrical power distribution, and accordingly, the corresponding components may be configured to provide DC power distribution and transmission. In such configuration, a rectifier may for example be connected between each of the electrical power sources 50, in particular AC generators and the respective directly powered main switchgear. Speed control of the thrusters may then be provided by each thruster drive 60 comprising an inverter supplying a respective AC electrical power at controllable frequency to the AC electrical motor of the thruster drive 60.

A cable set provides the cables that are necessary for the respective electrical connection, e.g. three single phase cables for a three phase AC connection or two cables for a DC connection or the like. In some embodiments, only a single cable may be comprised in a cable set, e.g. for a DC connection with a return via the vessels hull. A cable set may possibly also comprise cables for control/communication.

By embodiments of the present invention, a reduction of the required overcapacity of the power system 100 may be achieved due to the segregation that does not require the presence of an electrical power source 50 for each main switchboard to which a thruster drive is connected. Furthermore, power to fewer thruster drives is lost in case of a worst case failure scenario, such as the loss of a complete compartment. In consequence, the rating of the thrusters may be reduced, or if the thruster rating is maintained, the vessel may be capable of maintaining position and operation in more severe weather conditions. Reduced thruster rating leads to a direct reduction in weight, dimension/space and costs, which are critical parameters for an offshore vessel. When reducing the thruster ratings, the rating of the corresponding electrical equipment can similarly be reduced, for example rating of power cables and the like, which again will lead to a reduction in the space, weight and cost requirements. Due to the reduced fault consequences (loss of only a single thruster upon loss of a compartment), operational flexibility may be improved and the number of days per year when a thruster can be taken out of operation for inspection and maintenance can be increased.

The configuration of the power system 100 furthermore allows fewer cable sets to be used for connecting remote thruster drives, which are for example located in different sections of the floating vessel, or within pontoons of the floating vessel. Since as outlined above, only two cable sets are required in general to provide electrical power to several thruster drives, a significant reduction of cost and weight can be achieved, and the cabling of the vessel can be facilitated. Compared to power systems which utilize a higher degree of segregation for achieving better reliability, the power system 100 of embodiments of the invention requires less cabling, space and weight to achieve a similar degree of segregation, and furthermore is more cost-efficient. Also, the power system 100 does not require extensive cable rooting on deck of the floating vessel, which generally results in a sub-optimal deck arrangement and utilization.

## Claims

1. A power system of a floating vessel, in particular of a dynamically positioned offshore vessel, comprising:
- at least two segregated power system sections (31, 32), each comprising at least one electrical power source (50), in particular a generator, and a directly powered main switchboard (11, 12) which is supplied with electrical power from the electrical power source (50), wherein the directly powered main switchboard (11, 12) is configured to distribute electrical power to one or more thruster drives (60) of the floating vessel for operating the respective thruster drives,
- at least two indirectly powered main switchboards (21, 22) to each of which a thruster drive (60) of the floating vessel is connected, wherein each indirectly powered main switchboard (21, 22) is configured to receive electrical power indirectly from at least one of said electrical power sources (50) via at least one of said directly or indirectly powered main switchboards, wherein each indirectly powered main switchboard (21, 22) is configured to supply electrical power to the respective connected thruster drive (60) for operating the thruster drive,
wherein the at least two directly powered main switchboards (11, 12) and the at least two indirectly powered main switchboards (21, 22) are connected in a ring configuration such that two or more indirectly powered main switchboards (21, 22) are connected in series between a first directly powered main switchboard (11) and a second directly powered main switchboard (12) **characterized in that** at least two of said indirectly powered main switchboards (21, 22, 23, 24) are series connected between two directly powered main switchboards (11, 12) to form a first loop (91) and at least two of said indirectly powered main switchboards (25, 26, 27, 28) are series connected between two directly powered main switchboards (12, 13, 14) to form a second loop (92); the first loop (91) being connected between said first and second directly powered main switchboards (11, 12) and the second loop (92) being connected between said second and a third directly powered main switchboard (12, 13), or the first loop (91) being connected between said first and second directly powered main switchboards (11, 12) and the second loop (92) being connected between third and fourth directly powered main switchboard (13, 14); and, wherein each segregated power system section (31, 32) comprises an engine room in which the electrical power source (50) is located and a switchboard room in which the directly powered main switchboard (11, 12) is located, the engine rooms and the switchboard rooms being located in the same section (210) of the floating vessel (200), wherein the indirectly powered main switchboards (21, 22) are arranged in further rooms (80), in particular thruster rooms or switchboard rooms, located in a different section (220, 230) of the floating vessel (200).

2. The power system according to claim 1, wherein the power system comprises at least three indirectly powered main switchboards (21, 22, 23) which are connected in series between the first directly powered main switchboard (11) and the second directly powered main switchboard (12), so that at least one indirectly powered main switchboard (23) is connected between two indirectly powered main switchboards (21, 22) in said ring configuration.

3. The power system according to claim 1 or 2, wherein the power system comprises at least three segregated power system sections (31, 32, 33), each comprising a directly powered main switchboard (11, 12, 13) and at least one electrical power source (50), in particular a generator, connected thereto.

4. The power system according to any of the preceding claims, wherein each segregated power system section comprises at least two electrical power sources (50), in particular generators, connected to the directly powered main switchboard (11, 12, 13), and/or wherein to each directly powered main switchboard (11, 12, 13), at least one thruster drive (60) is connected.

5. The power system according to any of the preceding claims, wherein the power system comprises a power distribution bus (40) having several bus sections (41, 42, 43, 44), wherein each main switchboard (11, 12, 21, 22) comprises a bus section of the power distribution bus (40), the main switchboards (11, 12, 21, 22) being connected in said ring configuration by connecting the respective bus sections (41, 42, 43, 44) in a ring configuration using bus ties (45) and/or cables (71, 72).

6. The power system according to any of the preceding claims, wherein the electrical power source (50) and the directly powered main switchboard (11, 12) of each segregated power system section (31, 32) are provided in a different room or compartment than the electrical power source and the directly powered main switchboard of the other segregated power system sections (31, 32).

7. The power system according to any of the preceding claims, wherein each of the at least two directly powered main switchboards (11, 12) and the at least two indirectly powered main switchboards (21, 22) is provided in a different room or compartment onboard the floating vessel (200).

8. The power system according to any of the preceding claims, wherein the directly powered main switchboards (11, 12) are provided in a first section (210) of the floating vessel (200), in particular a middle section or a deck, and wherein the series connection of the indirectly powered main switchboards (21, 22) forms at least a first loop (91) between the first and second directly powered main switchboards (11, 12), wherein the indirectly powered main switchboards (21, 22) of the first loop (91) are located in a second section (220, 230) of the floating vessel, in particular a front or a rear section or in a pontoon, the power system further comprising a first cable set (71) connecting a first end of said first loop (91) to the first directly powered main switchboard (11) and a second cable set (72) connecting a second end of said first loop (91) to the second directly powered main switchboard (12).

9. The power system according to claim 8, wherein the floating vessel is a semi-submersible having a deck (250) and at least two pontoons (251, 252), the power system having a second loop (92) of series connected indirectly powered main switchboards (25, 26), wherein the directly powered main switchboards (11, 12) are arranged on the deck (250) and the indirectly powered main switchboards of the first loop (91) are arranged in one of the pontoons (251) and the indirectly powered main switchboards of the second loop (92) are arranged in the other of the pontoons (252).

10. The power system according to any of the preceding claims, wherein each of the directly and indirectly powered main switchboards (11, 12, 21, 22) is connected to one thruster drive (60) to provide the thruster drive with electrical power for operation.

11. The power system according to any of the preceding claims, wherein the indirectly powered main switchboards (21, 22) further comprise one or more local energy storage systems.

12. A power system according to claim 11, wherein the energy storage systems comprise one of batteries, capacitors, or flywheels.

13. A power system according to claim 11 or 12, wherein the energy storage system is collocated with the indirectly powered main switchboard.

14. A floating vessel (200) comprising a power system (100) according to any of claims 1-13.

15. A method of providing a power system for a floating vessel, in particular of a dynamically positioned offshore vessel, comprising the steps of
- providing at least two segregated power system sections (31, 32), each comprising at least one electrical power source (50), in particular a generator, and a directly powered main switchboard (11, 12) which is supplied with electrical power from the electrical power source (50), wherein the directly powered main switchboard (11, 12) is configured to distribute electrical power to one or more thruster drives (60) of the floating vessel for operating the respective thruster drives,
- providing at least two indirectly powered main switchboards (21, 22) to each of which a thruster drive (60) of the floating vessel is connected, wherein each indirectly powered main switchboard (21, 22) is configured to supply electrical power to the respective thruster drive (60) for operating the thruster drive,
- connecting each indirectly powered main switchboard (21, 22) so as to receive electrical power indirectly from at least one of said electrical power sources (50) via at least one of said directly or indirectly powered main switchboards (11, 12, 21, 22), connecting the at least two directly powered main switchboards (11, 12) and the at least two indirectly powered main switchboards (21, 22) in a ring configuration such that two or more indirectly powered main switchboards (21, 22) are connected in series between a first directly powered main switchboard (11) and a second directly powered main switchboard (12); **characterized in that** at least two of said indirectly powered main switchboards (21, 22, 23, 24) are series connected between two directly powered main switchboards (11, 12) to form a first loop (91) and at least two of said indirectly powered main switchboards (25, 26, 27, 28) are series connected between two directly powered main switchboards (12, 13, 14) to form a second loop (92); the first loop (91) being connected between said first and second directly powered main switchboards (11, 12) and the second loop (92) being connected between said second and a third directly powered main switchboard (12, 13), or the first loop (91) being connected between said first and second directly powered main switchboards (11, 12) and the second loop (92) being connected between the third and a fourth directly powered main switchboard (13, 14); and,
wherein each segregated power system section (31, 32) comprises an engine room in which the electrical power source (50) is located and a switchboard room in which the directly powered main switchboard (11, 12) is located, and wherein the indirectly powered main switchboards (21, 22) are arranged in further rooms (80), in particular thruster rooms or switchboard rooms,
the steps further comprising locating the engine rooms and the switchboard rooms in the same section (210) of the floating vessel (200) and locating the thruster rooms or switchboard rooms in a different section (220, 230) of the floating vessel (200).

## Patentansprüche

1. Stromversorgungssystem für ein Wasserfahrzeug, insbesondere ein dynamisch positioniertes Offshore-Fahrzeug, mit Folgendem:
- mindestens zwei getrennten Stromversorgungssystemabschnitten (31, 32), die jeweils mindestens eine Stromquelle (50), insbesondere einen Generator, und eine direkt gespeiste Hauptschalttafel (11, 12) umfassen, die mit Strom aus der Stromquelle (50) versorgt wird, wobei die direkt gespeiste Hauptschalttafel (11, 12) so konfiguriert ist, dass sie auf einen oder mehrere Strahlruderantriebe (60) des Wasserfahrzeugs Strom zum Betreiben der jeweiligen Strahlruderantriebe verteilt,
- mindestens zwei indirekt gespeisten Hauptschalttafeln (21, 22), wobei mit jeder davon ein Strahlruderantrieb (60) des Wasserfahrzeugs verbunden ist, wobei jede indirekt gespeiste Hauptschalttafel (21, 22) so konfiguriert ist, dass sie indirekt aus mindestens einer der Stromquellen (50) über mindestens eine der direkt oder indirekt gespeisten Hauptschalttafeln mit Strom versorgt wird, wobei jede indirekt gespeiste Hauptschalttafel (21, 22) so konfiguriert ist, dass sie zum Betreiben des jeweiligen verbundenen Strahlruderantriebs (60) den Strahlruderantrieb mit Strom versorgt,
wobei die mindestens zwei direkt gespeisten Hauptschalttafeln (11, 12) und die mindestens zwei indirekt gespeisten Hauptschalttafeln (21, 22) in einer Ringkonfiguration so verbunden sind, dass zwei oder mehr indirekt gespeiste Hauptschalttafeln (21, 22) zwischen eine erste direkt gespeiste Hauptschalttafel (11) und eine zweite direkt gespeiste Hauptschalttafel (12) in Reihe geschaltet sind, **dadurch gekennzeichnet, dass**
mindestens zwei der indirekt gespeisten Hauptschalttafeln (21, 22, 23, 24) zwischen zwei direkt gespeiste Hauptschalttafeln (11, 12) in Reihe geschaltet sind, so dass ein erster Stromkreis (91) entsteht, und mindestens zwei der indirekt gespeisten Hauptschalttafeln (25, 26, 27, 28) zwischen zwei direkt gespeiste Hauptschalttafeln (12, 13, 14) in Reihe geschaltet sind, so dass ein zweiter Stromkreis (92) entsteht, wobei der erste Stromkreis (91) zwischen die erste und die zweite direkt gespeiste Hauptschalttafel (11, 12) und der zweite Stromkreis (92) zwischen die zweite und eine dritte direkt gespeiste Hauptschalttafel (12, 13) oder der erste Stromkreis (91) zwischen die erste und die zweite direkt gespeiste Hauptschalttafel (11, 12) und der zweite Stromkreis (92) zwischen die dritte und eine vierte direkt gespeiste Hauptschalttafel (13, 14) geschaltet ist und wobei jeder getrennte Stromversorgungssystemabschnitt (31, 32) einen Maschinenraum umfasst, in dem sich die Stromquelle (50) befindet, und einen Schaltraum, in dem sich die direkt gespeiste Hauptschalttafel (11, 12) befindet, wobei sich die Maschinen- und die Schalträume in dem gleichen Abschnitt (210) des Wasserfahrzeugs (200) befinden, wobei die indirekt gespeisten Hauptschalttafeln (21, 22) in weiteren Räumen (80), insbesondere Strahlruder- oder Schalträumen, angeordnet sind, die sich in einem anderen Abschnitt (220, 230) des Wasserfahrzeugs (200) befinden.

2. Stromversorgungssystem nach Anspruch 1, wobei das Stromversorgungssystem mindestens drei indirekt gespeiste Hauptschalttafeln (21, 22, 23) umfasst, die zwischen die erste direkt gespeiste Hauptschalttafel (11) und die zweite direkt gespeiste Hauptschalttafel (12) in Reihe geschaltet sind, so dass mindestens eine indirekt gespeiste Hauptschalttafel (23) in der Ringkonfiguration zwischen zwei indirekt gespeiste Hauptschalttafeln (21, 22) geschaltet ist.

3. Stromversorgungssystem nach Anspruch 1 oder 2, wobei das Stromversorgungssystem mindestens drei getrennte Stromversorgungssystemabschnitte (31, 32, 33) umfasst, die jeweils eine direkt gespeiste Hauptschalttafel (11, 12, 13) und mindestens eine damit verbundene Stromquelle (50), insbesondere einen Generator, umfassen.

4. Stromversorgungssystem nach einem der vorhergehenden Ansprüche, wobei jeder getrennte Stromversorgungssystemabschnitt mindestens zwei mit der direkt gespeisten Hauptschalttafel (11, 12, 13) verbundene Stromquellen (50), insbesondere Generatoren, umfasst und/oder mit jeder direkt gespeisten Hauptschalttafel (11, 12, 13) mindestens ein Strahlruderantrieb (60) verbunden ist.

5. Stromversorgungssystem nach einem der vorhergehenden Ansprüche, wobei das Stromversorgungssystem eine Stromverteilungsschiene (40) mit mehreren Schienenabschnitten (41, 42, 43, 44) umfasst, jede Hauptschalttafel (11, 12, 21, 22) einen Schienenabschnitt der Stromverteilungsschiene (40) umfasst, die Hauptschalttafeln (11, 12, 21, 22) durch Verbinden der jeweiligen Schienenabschnitte (41, 42, 43, 44) in einer Ringkonfiguration unter Verwendung von Sammelschienenkupplungen (45) und/oder Kabeln (71, 72) in der Ringkonfiguration verbunden sind.

6. Stromversorgungssystem nach einem der vorhergehenden Ansprüche, wobei die Stromquelle (50) und die direkt gespeiste Hauptschalttafel (11, 12) jedes getrennten Stromversorgungssystemabschnitts (31, 32) in einem anderen Raum oder Bereich vorgesehen sind als die Stromquelle und die direkt gespeiste Hauptschalttafel der anderen getrennten Stromversorgungssystemabschnitte (31, 32).

7. Stromversorgungssystem nach einem der vorhergehenden Ansprüche, wobei jede der mindestens zwei direkt gespeisten Hauptschalttafeln (11, 12) und der mindestens zwei indirekt gespeisten Hauptschalttafeln (21, 22) in einem anderen Raum oder Schott an Bord des Wasserfahrzeugs (200) vorgesehen ist.

8. Stromversorgungssystem nach einem der vorhergehenden Ansprüche, wobei die direkt gespeisten Hauptschalttafeln (11, 12) in einem ersten Abschnitt (210) des Wasserfahrzeugs (200), insbesondere einem mittleren Abschnitt oder Deck, vorgesehen sind und die Reihenschaltung der indirekt gespeisten Hauptschalttafeln (21, 22) zumindest einen ersten Stromkreis (91) zwischen der ersten und der zweiten direkt gespeisten Hauptschalttafel (11, 12) bildet, wobei sich die indirekt gespeisten Hauptschalttafeln (21, 22) des ersten Stromkreises (91) in einem zweiten Abschnitt (220, 230) des Wasserfahrzeugs, insbesondere einem vorderen oder hinteren Abschnitt oder einem Ponton, befinden, wobei das Stromversorgungssystem ferner einen ersten Kabelsatz (71), der ein erstes Ende des ersten Stromkreises (91) mit der ersten direkt gespeisten Hauptschalttafel (11) verbindet, und einen zweiten Kabelsatz (72) umfasst, der ein zweites Ende des ersten Stromkreises (91) mit der zweiten direkt gespeisten Hauptschalttafel (12) verbindet.

9. Stromversorgungssystem nach Anspruch 8, wobei es sich bei dem Wasserfahrzeug um einen Halbtaucher mit einem Deck (250) und mindestens zwei Pontons (251, 252) handelt, wobei das Stromversorgungssystem einen zweiten Stromkreis (92) aus in Reihe geschalteten indirekt gespeisten Hauptschalttafeln (25, 26) aufweist, wobei die direkt gespeisten Hauptschalttafeln (11, 12) auf dem Deck (250) und die indirekt gespeisten Hauptschalttafeln des ersten Stromkreises (91) in einem der Pontons (251) und die indirekt gespeisten Hauptschalttafeln des zweiten Stromkreises (92) in dem anderen Ponton (252) angeordnet sind.

10. Stromversorgungssystem nach einem der vorhergehenden Ansprüche, wobei jede der direkt und der indirekt gespeisten Hauptschalttafeln (11, 12, 21, 22) mit einem Strahlruderantrieb (60) verbunden ist, um diesen zum Betrieb mit Strom zu versorgen.

11. Stromversorgungssystem nach einem der vorhergehenden Ansprüche, wobei die indirekt gespeisten Hauptschalttafeln (21, 22) ferner ein oder mehrere lokale Energiespeichersysteme umfassen.

12. Stromversorgungssystem nach Anspruch 11, wobei die Energiespeichersysteme Batterien, Kondensatoren oder Schwungräder umfassen.

13. Stromversorgungssystem nach Anspruch 11 oder 12, wobei sich das Energiespeichersystem bei der indirekt gespeisten Hauptschalttafel befindet.

14. Wasserfahrzeug (200) mit einem Stromversorgungssystem (100) nach einem der Ansprüche 1 bis 13.

15. Verfahren zum Bereitstellen eines Stromversorgungssystems für ein Wasserfahrzeug, insbesondere ein dynamisch positioniertes Offshore-Fahrzeug, das folgende Schritte umfasst:
- Bereitstellen von mindestens zwei getrennten Stromversorgungssystemabschnitten (31, 32), die jeweils mindestens eine Stromquelle (50), insbesondere einen Generator, und eine direkt gespeiste Hauptschalttafel (11, 12) umfassen, die mit Strom aus der Stromquelle (50) versorgt wird, wobei die direkt gespeiste Hauptschalttafel (11, 12) so konfiguriert ist, dass sie auf einen oder mehrere Strahlruderantriebe (60) des Wasserfahrzeugs Strom zum Betreiben der jeweiligen Strahlruderantriebe verteilt,
- Bereitstellen von mindestens zwei indirekt gespeisten Hauptschalttafeln (21, 22), wobei mit jeder davon ein Strahlruderantrieb (60) des Wasserfahrzeugs verbunden ist, wobei jede indirekt gespeiste Hauptschalttafel (21, 22) so konfiguriert ist, dass sie zum Betreiben des jeweiligen Strahlruderantriebs (60) den Strahlruderantrieb mit Strom versorgt,
- derartiges Verbinden jeder indirekt gespeisten Hauptschalttafel (21, 22), dass sie indirekt aus mindestens einer der Stromquellen (50) über mindestens eine der direkt oder indirekt gespeisten Hauptschalttafeln (11, 12, 21, 22) mit Strom versorgt wird, derartiges Verbinden der mindestens zwei direkt gespeisten Hauptschalttafeln (11, 12) und der mindestens zwei indirekt gespeisten Hauptschalttafeln (21, 22) in einer Ringkonfiguration, dass zwei oder mehr indirekt gespeiste Hauptschalttafeln (21, 22) zwischen eine erste direkt gespeiste Hauptschalttafel (11) und eine zweite direkt gespeiste Hauptschalttafel (12) in Reihe geschaltet sind, **dadurch gekennzeichnet, dass**
mindestens zwei der indirekt gespeisten Hauptschalttafeln (21, 22, 23, 24) zwischen zwei direkt gespeiste Hauptschalttafeln (11, 12) in Reihe geschaltet werden, so dass ein erster Stromkreis (91) entsteht, und mindestens zwei der indirekt gespeisten Hauptschalttafeln (25, 26, 27, 28) zwischen zwei direkt gespeiste Hauptschalttafeln (12, 13, 14) in Reihe geschaltet werden, so dass ein zweiter Stromkreis (92) entsteht, wobei der erste Stromkreis (91) zwischen die erste und die zweite direkt gespeiste Hauptschalttafel (11, 12) und der zweite Stromkreis (92) zwischen die zweite und eine dritte direkt gespeiste Hauptschalttafel (12, 13) oder der erste Stromkreis (91) zwischen die erste und die zweite direkt gespeiste Hauptschalttafel (11, 12) und der zweite Stromkreis (92) zwischen die dritte und eine vierte direkt gespeiste Hauptschalttafel (13, 14) geschaltet wird und
wobei jeder getrennte Stromversorgungssystemabschnitt (31, 32) einen Maschinenraum umfasst, in dem sich die Stromquelle (50) befindet, und einen Schaltraum, in dem sich die direkt gespeiste Hauptschalttafel (11, 12) befindet, und wobei die indirekt gespeisten Hauptschalttafeln (21, 22) in weiteren Räumen (80), insbesondere Strahlruder- oder Schalträumen, angeordnet werden,
wobei die Schritte ferner das Anordnen der Maschinen- und der Schalträume in dem gleichen Abschnitt (210) des Wasserfahrzeugs (200) und der Strahlruder- oder Schalträume in einem anderen Abschnitt (220, 230) des Wasserfahrzeugs (200) umfasst.

## Revendications

1. Système d'alimentation électrique d'un bâtiment flottant, en particulier d'un bâtiment de haute mer à positionnement dynamique, comprenant :
- au moins deux sections séparées (31, 32) de système d'alimentation électrique, chacune comprenant au moins une source d'énergie électrique (50), en particulier un générateur, et un tableau de distribution principal alimenté directement (11, 12) qui est alimenté en énergie électrique depuis la source d'énergie électrique (50), étant entendu que le tableau de distribution principal alimenté directement (11, 12) est configuré en vue de distribuer de l'énergie électrique à un ou plusieurs entraînements propulseurs (60) du bâtiment flottant en vue de faire fonctionner les entraînements propulseurs respectifs ;
- au moins deux tableaux de distribution principaux alimentés indirectement (21, 22) à chacun desquels un entraînement propulseur (60) du bâtiment flottant est relié, étant entendu que chaque tableau de distribution principal alimenté indirectement (21, 22) est configuré pour recevoir de l'énergie électrique indirectement d'au moins l'une desdites sources d'énergie électrique (50) par le biais d'au moins l'un desdits tableaux de distribution principaux alimentés directement ou indirectement, étant entendu que chaque tableau de distribution principal alimenté indirectement (21, 22) est configuré en vue de fournir de l'énergie électrique à l'entraînement propulseur (60) auquel il est relié respectivement, en vue de faire fonctionner l'entraînement propulseur,
étant entendu que les au moins deux tableaux de distribution principaux alimentés directement (11, 12) et les au moins deux tableaux de distribution principaux alimentés indirectement (21, 22) sont reliés selon une configuration en anneau de telle sorte que deux ou plusieurs tableaux de distribution principaux alimentés indirectement (21, 22) soient montés en série entre un premier tableau de distribution principal alimenté directement (11) et un deuxième tableau de distribution principal alimenté directement (12),
**caractérisé en ce qu'**au moins deux desdits tableaux de distribution principaux alimentés indirectement (21, 22, 23, 24) sont montés en série entre deux tableaux de distribution principaux alimentés directement (11, 12) pour former une première boucle (91) et **en ce qu'**au moins deux desdits tableaux de distribution principaux alimentés indirectement (25, 26, 27, 28) sont montés en série entre deux tableaux de distribution principaux alimentés directement (12, 13, 14) pour former une deuxième boucle (92), la première boucle (91) étant montée entre lesdits premier et deuxième tableaux de distribution principaux alimentés directement (11, 12) et la deuxième boucle (92) étant montée entre ledit deuxième et un troisième tableau de distribution principal alimenté directement (12, 13), ou la première boucle (91) étant montée entre lesdits premier et deuxième tableaux de distribution principaux alimentés directement (11, 12) et la deuxième boucle (92) étant montée entre le troisième et un quatrième tableau de distribution principal alimenté directement (13, 14), et étant entendu que chaque section séparée (31, 32) de système d'alimentation électrique comprend une salle des machines dans laquelle la source d'énergie électrique (50) est située, et un local de tableau de distribution dans lequel le tableau de distribution principal alimenté directement (11, 12) est situé, les salles des machines et les locaux de tableau de distribution étant situés dans la même section (210) du bâtiment flottant (200), étant entendu que les tableaux de distribution principaux alimentés indirectement (21, 22) sont agencés dans d'autres salles (80), en particulier les salles de propulseur ou les locaux de tableau de distribution, situées dans une section différente (220, 230) du bâtiment flottant (200).

2. Système d'alimentation électrique selon la revendication 1, étant entendu que le système d'alimentation électrique comprend au moins trois tableaux de distribution principaux alimentés indirectement (21, 22, 23) qui sont montés en série entre le premier tableau de distribution principal alimenté directement (11) et le deuxième tableau de distribution principal alimenté directement (12) de sorte qu'au moins un tableau de distribution principal alimenté indirectement (23) soit monté entre deux tableaux de distribution principaux alimentés indirectement (21, 22) dans ladite configuration en anneau.

3. Système d'alimentation électrique selon la revendication 1 ou 2, étant entendu que le système d'alimentation électrique comprend au moins trois sections séparées (31, 32, 33) de système d'alimentation électrique, chacune comprenant un tableau de distribution principal alimenté directement (11, 12, 13) et au moins une source d'énergie électrique (50), en particulier un générateur, y reliée.

4. Système d'alimentation électrique selon l'une quelconque des revendications précédentes, étant entendu que chaque section séparée de système d'alimentation électrique comprend au moins deux sources d'énergie électrique (50), en particulier des générateurs, reliées au tableau de distribution principal alimenté directement (11, 12, 13), et/ou étant entendu qu'à chaque tableau de distribution principal alimenté directement (11, 12, 13) est relié au moins un entraînement propulseur (60).

5. Système d'alimentation électrique selon l'une quelconque des revendications précédentes, étant entendu que le système d'alimentation électrique comprend un bus de distribution d'énergie (40) comportant plusieurs sections (41, 42, 43, 44) de bus, étant entendu que chaque tableau de distribution principal (11, 12, 21, 22) comprend une section de bus du bus de distribution d'énergie (40), les tableaux de distribution principaux (11, 12, 21, 22) étant montés selon ladite configuration en anneau moyennant le montage des sections respectives (41, 42, 43, 44) de bus selon une configuration en anneau au moyen de couplages (45) de bus et/ou de câbles (71, 72) .

6. Système d'alimentation électrique selon l'une quelconque des revendications précédentes, étant entendu que la source d'énergie électrique (50) et le tableau de distribution principal alimenté directement (11, 12) de chaque section séparée (31, 32) de système d'alimentation électrique sont prévus dans une salle ou un compartiment différent de celui de la source d'énergie électrique et du tableau de distribution principal alimenté directement des autres sections séparées (31, 32) de système d'alimentation électrique.

7. Système d'alimentation électrique selon l'une quelconque des revendications précédentes, étant entendu que chacun des au moins deux tableaux de distribution principaux alimentés directement (11, 12) et des au moins deux tableaux de distribution principaux alimentés indirectement (21, 22) est prévu dans une salle ou un compartiment différent à bord du bâtiment flottant (200).

8. Système d'alimentation électrique selon l'une quelconque des revendications précédentes, étant entendu que les tableaux de distribution principaux alimentés directement (11, 12) sont prévus dans une première section (210) du bâtiment flottant (200), en particulier une section médiane ou un pont, et étant entendu que le montage en série des tableaux de distribution principaux alimentés indirectement (21, 22) forme au moins une première boucle (91) entre les premier et deuxième tableaux de distribution principaux alimentés directement (11, 12), étant entendu que les tableaux de distribution principaux alimentés indirectement (21, 22) de la première boucle (91) sont situés dans une deuxième section (220, 230) du bâtiment flottant, en particulier une section avant ou arrière ou dans un ponton, le système d'alimentation électrique comprenant par ailleurs un premier jeu (71) de câbles reliant une première extrémité de ladite première boucle (91) au premier tableau de distribution principal alimenté directement (11) et un deuxième jeu (72) de câbles reliant une deuxième extrémité de ladite première boucle (91) au deuxième tableau de distribution principal alimenté directement (12).

9. Système d'alimentation électrique selon la revendication 8, étant entendu que le bâtiment flottant est un semi-submersible comportant un pont (250) et au moins deux pontons (251, 252), le système d'alimentation électrique comportant une deuxième boucle (92) de tableaux de distribution principaux alimentés indirectement et montés en série (25, 26), étant entendu que les tableaux de distribution principaux alimentés directement (11, 12) sont agencés sur le pont (250) et que les tableaux de distribution principaux alimentés indirectement de la première boucle (91) sont agencés dans l'un des pontons (251) et que les tableaux de distribution principaux alimentés indirectement de la deuxième boucle (92) sont agencés dans l'autre des pontons (252).

10. Système d'alimentation électrique selon l'une quelconque des revendications précédentes, étant entendu que chacun des tableaux de distribution principaux alimentés directement et indirectement (11, 12, 21, 22) est relié à un entraînement propulseur (60) pour alimenter l'entraînement propulseur en énergie électrique en vue de le faire fonctionner.

11. Système d'alimentation électrique selon l'une quelconque des revendications précédentes, étant entendu que les tableaux de distribution principaux alimentés indirectement (21, 22) comprennent par ailleurs un ou plusieurs systèmes locaux d'accumulation d'énergie.

12. Système d'alimentation électrique selon la revendication 11, étant entendu que les systèmes d'accumulation d'énergie consistent en batteries, en condensateurs ou en volants d'inertie.

13. Système d'alimentation électrique selon la revendication 11 ou 12, étant entendu que le système d'accumulation d'énergie est situé au même endroit que le tableau de distribution principal alimenté indirectement.

14. Bâtiment flottant (200) comprenant un système d'alimentation électrique (100) selon l'une quelconque des revendications 1-13.

15. Procédé de réalisation d'un système d'alimentation électrique pour bâtiment flottant, en particulier d'un bâtiment de haute mer à positionnement dynamique, comprenant les étapes consistant :
- à réaliser au moins deux sections séparées (31, 32) de système d'alimentation électrique, chacune comprenant au moins une source d'énergie électrique (50), en particulier un générateur, et un tableau de distribution principal alimenté directement (11, 12) qui est alimenté en énergie électrique depuis la source d'énergie électrique (50), étant entendu que le tableau de distribution principal alimenté directement (11, 12) est configuré en vue de distribuer de l'énergie électrique à un ou plusieurs entraînements propulseurs (60) du bâtiment flottant en vue de faire fonctionner les entraînements propulseurs respectifs ;
- à réaliser au moins deux tableaux de distribution principaux alimentés indirectement (21, 22) à chacun desquels un entraînement propulseur (60) du bâtiment flottant est relié, étant entendu que chaque tableau de distribution principal alimenté indirectement (21, 22) est configuré en vue de fournir de l'énergie électrique à l'entraînement propulseur (60) respectif, en vue de faire fonctionner l'entraînement propulseur ;
- à relier chaque tableau de distribution principal alimenté indirectement (21, 22) de sorte qu'il reçoive de l'énergie électrique indirectement d'au moins l'une desdites sources d'énergie électrique (50) par le biais d'au moins l'un desdits tableaux de distribution principaux alimentés directement ou indirectement (11, 12, 21, 22), à monter les au moins deux tableaux de distribution principaux alimentés directement (11, 12) et les au moins deux tableaux de distribution principaux alimentés indirectement (21, 22) selon une configuration en anneau de telle sorte que deux ou plusieurs tableaux de distribution principaux alimentés indirectement (21, 22) soient montés en série entre un premier tableau de distribution principal alimenté directement (11) et un deuxième tableau de distribution principal alimenté directement (12),
**caractérisé en ce qu'**au moins deux desdits tableaux de distribution principaux alimentés indirectement (21, 22, 23, 24) sont montés en série entre deux tableaux de distribution alimentés directement (11, 12) pour former une première boucle (91) et **en ce qu'**au moins deux desdits tableaux de distribution principaux alimentés indirectement (25, 26, 27, 28) sont montés en série entre deux tableaux de distribution principaux alimentés directement (12, 13, 14) pour former une deuxième boucle (92), la première boucle (91) étant montée entre lesdits premier et deuxième tableaux de distribution principaux alimentés directement (11, 12) et la deuxième boucle (92) étant montée entre ledit deuxième et un troisième tableau de distribution principal alimenté directement (12, 13), ou la première boucle (91) étant montée entre lesdits premier et deuxième tableaux de distribution principaux alimentés directement (11, 12) et la deuxième boucle (92) étant montée entre le troisième et un quatrième tableau de distribution principal alimenté directement (13, 14), et
étant entendu que chaque section séparée (31, 32) de système d'alimentation électrique comprend une salle des machines dans laquelle la source d'énergie électrique (50) est située, et un local de tableau de distribution dans lequel le tableau de distribution principal alimenté directement (11, 12) est situé, et étant entendu que les tableaux de distribution principaux alimentés indirectement (21, 22) sont agencés dans d'autres salles (80), en particulier des salles de propulseur ou des locaux de tableau de distribution,
les étapes consistant par ailleurs à situer les salles des machines et les locaux de tableau de distribution dans la même section (210) du bâtiment flottant (200) et à situer les salles de propulseur ou les locaux de tableau de distribution dans une section différente (220, 230) du bâtiment flottant (200).
